# EUROPÄISCHE PATENTSCHRIFT

(11) **EP 2 153 931 B1**
(45) Veröffentlichungstag und Bekanntmachung des Hinweises auf die Patenterteilung: **20.07.2011**
(21) Anmeldenummer: 08400038.9
(22) Anmeldetag: 05.08.2008
(51) Int. Cl.: B23K 26/42, D03D 15/00, B23K 37/00, F16P 1/06

(54) **Vorrichtung und Verfahren zum Ausbilden einer Vorrichtung zum Schutz vor Laserstrahlung**
Device and method for constructing a device to protect against laser radiation
Dispositif et procédé de fabrication d'un dispositif destiné à la protection de rayons laser

(43) Veröffentlichungstag der Anmeldung: 17.02.2010
(73) Patentinhaber: Antares GmbH, 09232 Hartmannsdorf (DE)
(72) Erfinder: Hertel, Dieter, 09661 Hainichen (DE); Bergelt, Jörg, 09116 Chemnitz (DE); Elsner, Holg, Dipl.-Ing., 09127 Chemnitz (DE); Ulbricht, Jens, Dipl.-Ing., 09306 Königshain-Wiederau (DE)
(74) Vertreter: Steiniger, Carmen

(56) Entgegenhaltungen:
- DE-A1- 3 638 874
- DE-U1- 20 320 479
- US-A- 4 208 458
- US-A- 5 151 095

## Beschreibung

Die vorliegende Erfindung betrifft eine Vorrichtung zum Schutz vor Laserstrahlung mit wenigstens einer Schutzwand, ein Verfahren zum Schutz vor Laserstrahlung unter Verwendung wenigstens einer Schutzwand und ein Verfahren zum Ausbilden einer Vorrichtung zum Schutz vor Laserstrahlung unter Verwendung wenigstens einer Schutzwand.

Eine Vorrichtung und ein Verfahren der oben genannten Gattung sind aus der Druckschrift DE 10 2006 026 555 A1 bekannt. Um einen Schutz vor Laserstrahlung zu erwirken, wird eine Laserstrahlung zwischen zwei absorbierenden Wandelementen mittels die optische Strahlung detektierender Sensoren erfasst. Dringt nach einer Zerstörung einer inneren Schutzwand Laserstrahlung zwischen das innere Wandelement und das äußere Wandelement ein, wird ein dort eingestelltes Modulationsmuster gestört. Es kommt zu einer Fehlermeldung, die einen Notstopp der Laseranlage auslöst.

Ein ähnliches Prinzip ist in der Druckschrift DE 199 40 476 A1 beschrieben. Die in dieser Druckschrift beschriebene Vorrichtung nutzt eine Laserschutzwand, die mit einer Kammer ausgebildet ist. In der Kammer ist ein Lichtsensor oder eine Vielzahl von auf der Innenfläche der Kammerinnenwand angeordneter Wärmesensoren vorgesehen. Die Kammerinnenwand ist im Auftreffbereich der Laserstrahlung als Lochblechwand mit einer Folie ausgebildet. Die Innenflächen der Kammer sind zur Erhöhung der Ansprechempfindlichkeit des Sensors mit einer, die in die Kammer einfallende Laserstrahlung spiegelnden Beschichtung versehen. Die auf die Folie der Lochblechwand der Kammer der Laserschutzwand auftreffende Laserstrahlung tritt nach einer Zerstörung der Folie durch die Löcher der Lochblechwand in das Innere der Kammer ein und wirkt auf den Lichtsensor bzw. Wärmesensoren, wodurch eine Abschaltung der Laserquelle erfolgt.

Die in den Druckschriften DE 10 2006 026 555 A1 und der Druckschrift DE 199 40 476 A1 beschriebenen Laserschutzvorrichtungen benötigen mindestens zwei Wandelemente sowie eine aufwendige optische Sensorik zwischen den Wandelementen, die nur kompliziert angeschlossen werden kann und darüber hinaus sehr empfindlich ist. Derartige Vorrichtungen sind daher sehr kostenintensiv, nur mit hohem Aufwand zu installieren und erfordern einen hohen Wartungsbedarf.

Die Druckschrift DE 36 38 874 A1 offenbart eine Schutzvorrichtung für Laser mit einem für Laserstrahlen undurchdringlichen Lichtfenster aus Plexiglas. Das Sichtfenster weist eine Innenschicht und eine Außenschicht auf, zwischen welchen ein elektrischer Leiter vorgesehen ist. Der elektrische Leiter kann in einer Nut zwischen den Schichten oder auch xerografisch auf einer Oberfläche einer Schicht aufgebracht sein. Der elektrische Leiter ist Teil einer Sicherheitsschaltung, durch die sich verhindert lässt, dass ein Laserstrahl aus irgendeinem Grund länger als eine vorgegebene Zeitspanne auf das Sichtfenster gerichtet bleibt. Durch die Sicherheitsschaltung können beispielweise Änderungen des Widerstandes des Leiters infolge einer Erhöhung der Temperatur durch direkten Einfall des Laserstrahls auf das Sichtfester erfasst oder ein Durchschmelzen des Leiters festgestellt werden.

Die in der Druckschrift DE 36 38 874 A1 beschriebene Schutzvorrichtung erfordert, dass der Laserstrahl direkt auf den elektrischen Leiter trifft, da sich nur dann dessen Widerstand infolge von Temperaturerhöhung ändern kann oder ein Durchschmelzen des Leiters erfolgt. Somit ist eine hohe Dichte von elektrischen Leitern in dem Sichtfenster vorzusehen. Darüber hinaus besitzt die bekannte Vorrichtung den Nachteil, dass es beim Durchschmelzen des Leiters zu einer Zerstörung der Sicherheitsschaltung kommt und somit die Sicherheitsschaltung danach nicht mehr verwendbar ist und gegebenenfalls zusammen mit dem Sichtfenster ausgetauscht werden muss.

Die Druckschrift DE 89 08 806.9 U1 beinhaltet eine Schutzvorrichtung für eine Laserstrahlbearbeitungsmaschine. Durch die Schutzvorrichtung soll verhindert werden, dass ein hochenergetischer Laserstrahl aus einem vorgesehenen begrenzten Arbeitsraum austritt und beispielsweise Augenverletzungen des Personals bzw. Brände verursacht. Bei der vorgeschlagenen Schutzvorrichtung ist in die den Arbeitsraum umgebenden Seitenwände ein an eine Not-Aus-Schaltung der Bearbeitungsmaschine angeschlossener stromdurchflossener Leiter integriert, der sich zum Beispiel in Form von Schleifen über die gesamte Wandfläche mit geringen Zwischenabständen erstreckt und unter Einwirkung eines Laserstrahls als Schmelzsicherung die Not-Aus-Schaltung aktiviert. Die Seitenwände sind als Verbundscheiben ausgebildet, wobei zwischen einer inneren durchsichtigen Kunstharzscheibe und einer äußeren Glasscheibe der mäanderförmig verlegte Leiterdraht angeordnet ist.

Der Leiterdraht kann in eine isolierende Klebefolie eingebettet sein, durch die die Scheiben der Verbundscheibe miteinander verbunden sind. Ferner kann der elektrische Leiter zwischen den beiden Scheiben der Verbundscheibe als Leiterbahn ausgebildet und auf einer der Scheiben durch Aufdampfen oder eine andere geeignete Technik angebracht sein.

Gemäß der beschriebenen Schutzvorrichtung und dem entsprechenden Verfahren ist es zwingend notwendig, dass der Laserstrahl den stromdurchlässigen Leiter schmilzt und somit zerstört, um einen Notstopp der Bearbeitungsmaschine auszulösen. Dies hat jedoch den Nachteil, dass nach einem solchen Notstopp der Leiter nicht mehr verwendbar ist und die gesamte Verbundscheibenanordnung erneuert oder der zwischen den Scheiben der Verbundscheibe angeordnete Leiter ausgetauscht werden muss, was mit einem erheblichen Aufwand verbunden ist. Zusätzlich beinhaltet die bekannte Schutzvorrichtung ein Sicherheitsrisiko. Da es zum Schmelzen des Leiterdrahtes erforderlich ist, dass bereits eine der Scheiben der Verbundscheibe zerstört ist, wobei nach dem Schmelzen des Leiterdrahtes die Gefahr besteht, dass auch bereits die zweite Scheibe der Verbundscheibe schon durch den Laserstrahl angegriffen ist, kann unter Umständen ein Notstopp zu spät ausgelöst werden.

Es ist daher die Aufgabe der vorliegenden Erfindung eine Vorrichtung und Verfahren der oben genannten Gattung zur Verfügung zu stellen, mit welchen auf kostengünstige und effiziente Weise ein großflächiger Schutz vor Laserstrahlung realisiert werden kann, wobei darüber hinaus der Strahlungsschutz hochgradig zuverlässig sein und eine sehr kurze Reaktionszeit besitzen soll, so dass sich die Vorrichtung und das Verfahren auch für den Schutz vor hochenergetischer Laserstrahlung eignen.

Die Aufgabe wird einerseits durch eine Vorrichtung zum Schutz vor Laserstrahlung mit wenigstens einer Schutzwand gemäß dem Anspruch 1 gelöst.

Die erfindungsgemäße Vorrichtung bietet den Vorteil, dass der metallische Leiter auf einfache und kostengünstige Weise textiltechnologisch in oder auf der Lage ein- oder aufgebracht werden kann, so dass auch großflächige Lagen mit geringem technologischen Aufwand hergestellt werden können. Daraufhin kann die Lage mit geringem Aufwand flächig auf oder in der Schutzwand befestigt werden, wobei die Lage so gestaltet werden kann, dass jeder Bereich der Schutzwand von der Lage bedeckt ist. Somit kann in jedem Bereich der Schutzwand ein zuverlässiger Strahlungsschutz zur Verfügung gestellt werden.

Kommt es zu einer Verformung der Schutzwand und/oder der Lage, die auf oder in der Schutzwand vorgesehen ist, durch die Einwirkung von Laserstrahlung, wird der metallische Leiter, der in oder auf der Lage ein- oder aufgebracht ist, auch dann gedehnt, wenn die Laserstrahlung nicht direkt auf den metallischen Leiter fällt. Die Längenänderung oder Dehnung des metallischen Leiters kann daraufhin erfasst werden und gegebenenfalls ein Notsignal ausgegeben oder ein Notstopp des Lasers ausgelöst werden. Hierfür muss die Schutzwand selbst, die darauf oder darin vorgesehene Lage oder der metallische Leiter nicht zerstört werden. Dennoch kann ein hochgradig zuverlässiger Strahlungsschutz über große Flächen hinweg auf kostengünstige Weise realisiert werden.

Der metallische Leiter ist ein genähter oder gestickter oder durch Nähen oder Sticken auf der Lage befestigter elektrischer Leiter. Durch Nähen oder Sticken können auf einfache und effiziente Weise Leiterbahnstrukturen in oder auf die Lage ein- bzw. aufgebracht werden, so dass schnell großflächige, mit metallischen Leitern versehene Lagen zur Verfügung gestellt werden können.

Vorzugsweise ist der metallische Leiter ein Draht oder ein mit einem Metall beschichteter Textilfaden. Sowohl ein Draht als auch ein mit Metall beschichteter Textilfaden lässt sich hocheffektiv mittels textiltechnologischer Mittel in oder auf die Lage ein- bzw. aufbringen.

Gemäß einer bevorzugten Weiterbildung der vorliegenden Erfindung ist der metallische Leiter linienförmig oder dreidimensional auf oder in der Lage vorgesehen. Mit linienförmigen metallischen Leitern lassen sich auf besonders einfache und zuverlässige Weise Längenänderungen oder Dehnungen des metallischen Leiters erfassen und auswerten, um daraufhin auf eine durch den Laser bedingte Deformation der Schutzwand zu schließen. Mit dreidimensionalen Leiterstrukturen lassen sich darüber hinaus Druck-, Dehnungs- und Schubmessungen durchführen, so dass eine Belastungsmessung an der Laserschutzwand möglich ist.

Es ist besonders günstig, wenn die Lage aus Textil, Folie, Schaum und/oder Papier ausgebildet ist. In oder auf ein solches Material lässt sich der metallische Leiter auf einfache Weise textiltechnologisch ein- bzw. aufbringen. Zudem eignet sich die Lage aus Textil, Folie, Schaum und/oder Papier besonders gut, um diese flächig auf die Schutzwand aufzubringen und an oder in dieser zu befestigen. Darüber hinaus können solche Lagen relativ dünn ausgebildet werden, so dass sie kaum zusätzlichen Platz auf oder in der Schutzwand benötigen, so dass die Gesamtkonstruktion dünn und leicht gestaltet werden kann.

Gemäß einer besonders bevorzugten Ausführungsvariante der vorliegenden Erfindung ist die Lage in einen Kunststoff oder ein Harz integriert. Dadurch kann die Lage zunächst mit dem metallischen Leiter versehen werden und nachfolgend in den Kunststoff oder das Harz eingebettet werden, wodurch der metallische Leiter zusätzlich in seiner Position in der Lage manifestiert wird.

Hierbei ist es besonders günstig, wenn dem Kunststoff oder Harz Kohlenstoff beigemengt ist. Hierdurch erhält das Material eine höhere Standzeit gegenüber der Einwirkung von Laserstrahlen.

Gemäß einem weiteren Beispiel der vorliegenden Erfindung sind mehrere Lagen sandwichartig in einem Kunststoff oder Harz integriert, wobei die metallischen Leiter der Lagen ein Sensorgitter ausbilden. Auf diese Weise können mehrere redundante metallische Leiterebenen ausgebildet werden, so dass dann, wenn einer der metallischen Leiter zerstört werden sollte, wenigstens einer der weiteren metallischen Leiter zum Laserschutz verwendet werden kann.

In einer weiteren bevorzugten Variante der Erfindung weist die Schutzwand wenigstens zwei Schutzwandelemente auf, zwischen welchen die Lage vorgesehen ist. Wird eines der Schutzwandelemente, das dem Laser zugewandt ist, deformiert, kann die Deformation auf die Lage, in der sich der metallische Leiter befindet, übertragen werden, wodurch ein Alarm oder ein Notstopp ausgelöst werden kann. Da sich die Lage zwischen den Schutzwandelementen befindet, ist die Lage von Einwirkungen von außen weitgehend geschützt.

Entsprechend einer ebenfalls vorteilhaften Weiterbildung der Erfindung sind ein oder mehrere Schutzwände, auf oder in welchen jeweils wenigstens eine Lage mit wenigstens einem textiltechnologisch ein- oder aufgebrachten metallischen Leiter vorgesehen ist, vorgesehen, die eine Einhausung für eine Laserbearbeitungseinrichtung ausbilden. Somit kann mit Hilfe der efindungsgemäßen Vorrichtung eine Laserbearbeitungseinrichtung vollständig eingehaust werden, wobei durch die wenigstens eine an den Schutzwänden bzw. der Decke der Einhausung vorgesehene Lage ein Rundumschutz vor Laserstrahlen gewährleistet ist.

In einem Beispiel der vorliegenden Erfindung ist die Lage auf einer Innenfläche der Einhausung der Laserbearbeitungsvorrichtung zugewandt. Bei dieser Konstruktionsform gelangen die Laserstrahlen bei einer Fehlfunktion der Laserbearbeitungsvorrichtung direkt auf die Lage, in welcher der wenigstens eine metallische Leiter vorgesehen ist, wodurch sich die Lage mit dem metallischen Leiter deformiert und sofort ein Alarm oder Notstopp der Laserbearbeitungsvorrichtung ausgelöst werden kann. Dabei ist es nicht erforderlich, dass sich die Schutzwand selbst deformiert.

In einem weiteren Ausführungsbeispiel der vorliegenden Erfindung ist die Lage auf einer Außen- oder Innenfläche der Einhausung, der Laserbearbeitungsvorrichtung abgewandt, vorgesehen. Bei dieser Konstruktionsform wird der metallische Leiter der Lage erst dann deformiert, wenn zumindest diejenige Schutzwand, die der Laserbearbeitungsvorrichtung zugewandt ist, deformiert ist. Es ist demnach bei dieser Vorrichtung eine intensivere oder längere Einwirkung von Laserstrahlen auf die Einhausung notwendig, so dass die Schutzvorrichtung anspricht. Dies hat den Vorteil, dass nicht jede mechanische Einwirkung auf die Lage sofort zu einem Alarm oder Notstopp der Laserbearbeitungsvorrichtung führt.

In einer weiteren Ausführungsform der vorliegenden Erfindung ist die Schutzwand als eine separate Stellwand ausgebildet. Die Stellwand kann variabel geeignet positioniert werden, um einen geeigneten Schutz vor Laserstrahlung zu ermöglichen.

Es hat sich ferner als günstig erwiesen, wenn die Vorrichtung wenigstens einen Temperatursensor aufweist. Wird neben der Deformation des metallischen Leiters in der Lage zusätzlich durch den Temperatursensor eine erhöhte Temperatur gemessen, kann im Wesentlichen ausgeschlossen werden, dass die Deformation des metallischen Leiters auf eine rein mechanische Einwirkung auf die Lage bzw. die Schutzwand zurückzuführen ist.

Die Aufgabe der Erfindung wird weiterhin durch ein Verfahren zum Ausbilden einer Vorrichtung zum Schutz vor Laserstrahlung unter Verwendung wenigstens einer Schutzwand gemäß dem Anspruch 14 gelöst.

Mit Hilfe des erfindungsgemäßen Verfahrens kann somit eine Vorrichtung zum Schutz vor Laserstrahlen ausgebildet werden, die aufgrund der textiltechnologischen Einbringung des metallischen Leiters in oder auf die Lage und deren einfache Anbringung an der Schutzwand großflächig und dennoch preisgünstig hergestellt werden kann, und darüber hinaus einen sehr effektiven Schutz vor Laserstrahlung bietet.

Hierbei wird der metallische Leiter durch Nähen oder Sticken in die Lage eingebracht oder durch Nähen oder Sticken auf der Lage befestigt. Der Näh- oder Stickvorgang kann mit hoher Effektivität ausgeführt werden, wobei großflächig hochqualitative Leiterbahnstrukturen in bzw. auf die Lage ein- bzw. aufgebracht werden können.

Gemäß einer weiteren Ausführungsvariante der vorliegenden Erfindung wird die Lage mit dem ein- oder aufgebrachten metallischen Leiter in einen härtenden Kunststoff oder ein härtendes Harz eingegossen. Somit kann zunächst die Lage mit dem metallischen Leiter hergestellt und im Folgenden in den Kunststoff oder Harz eingegossen oder getränkt werden.

In einer vorteilhaften Weiterbildung der vorliegenden Erfindung wird dem Kunststoff oder dem Harz Kohlenstoff beigemengt. Durch die Hinzufügung von Kohlenstoff, beispielsweise in Form von Kohlenstofffasern, kann die Standzeit der Lage bei einem Auftreffen von Laserstrahlung erhöht werden.

Der metallische Leiter kann durch Löten, Kleben, durch Kraftschluss, mit textiltechnologischen Verfahren oder durch Ultraschall elektrisch kontaktiert werden. Somit kann der metallische Leiter, je nach Anwendungsfall, geeignet elektrisch angeschlossen werden.

Die Lage kann auf oder in die Schutzwand aufgeklebt, auflaminiert, geschraubt, genagelt oder geklettet werden. Auf diese Weise ist es möglich, große Flächen auf oder in der Schutzwand schnell und einfach mit der Lage zu versehen.

Die Aufgabe wird darüber hinaus durch ein Verfahren zum Schutz vor Laserstrahlung unter Verwendung wenigstens einer Schutzwand gemäß dem Anspruch 19 gelöst.

Somit wird erfindungsgemäß ein Verfahren zum Schutz vor Laserstrahlung zur Verfügung gestellt, welches auf einfache und kostengünstige Weise einen großflächigen und effektiven Schutz vor Laserstrahlung ermöglicht.

Vorteilhafte Ausführungsformen der vorliegenden Erfindung werden im Folgenden anhand der Figuren der Zeichnung näher erläutert, wobei
- **Figur 1**: schematisch eine Ausführungsform der erfindungsgemäßen Vorrichtung zeigt, bei welcher eine mit metallischen Leitern versehene Lage auf einer Schutzwand aufgebracht ist;
- **Figur 2**: schematisch eine weitere Ausführungsform der erfindungsgemäßen Vor- richtung zeigt, bei welcher eine mit metallischen Leitern versehene Lage zwischen zwei Schutzwandelementen vorgesehen ist;
- **Figur 3**: schematisch eine weitere Ausführungsvariante der erfindungsgemäßen Vorrichtung zeigt, wobei eine mit metallischen Leitern versehene Lage auf einer Außenseite eines Schutzwandelementes, zwischen zwei Schutz- wandelementen vorgesehen ist;
- **Figur 4**: schematisch eine Lage mit darauf vorgesehenen metallischen Leitern zeigt, welche mit Kunststoff oder Harz getränkt wird;
- **Figur 5**: schematisch eine in einen Kunststoff oder ein Harz integrierte Lage mit darin vorgesehenen metallischen Leitern zeigt;
- **Figur 6**: schematisch einen genähten oder gestickten metallischen Leiter auf einer Lage zeigt;
- **Figur 7**: schematisch einen im fiber-taylor-placement-Verfahren auf eine Lage auf- gebrachten metallischen Leiter zeigt;
- **Figur 8**: schematisch eine Anordnung aus mehreren mit metallischen Leitern ver- sehenen Lagen zeigt, die sandwichartig in einem Kunststoff oder einem Harz integriert sind;
- **Figur 9**: schematisch eine Stapelanordnung aus mehreren, mit metallischen Leitern versehenen Lagen zeigt;
- **Figur 10**: schematisch eine weitere Ausführungsform der erfindungsgemäßen Vor- richtung zeigt, welche als Einhausung für eine Laserbearbeitungsvorrich- tung verwendet werden kann; und
- **Figur 11**: schematisch ein weiteres Ausführungsbeispiel der erfindungsgemäßen Vorrichtung zeigt, welche als eine Schutzwand zum Schutz vor Laserstrah- lung aus einer Laserbearbeitungsvorrichtung ausgebildet ist.

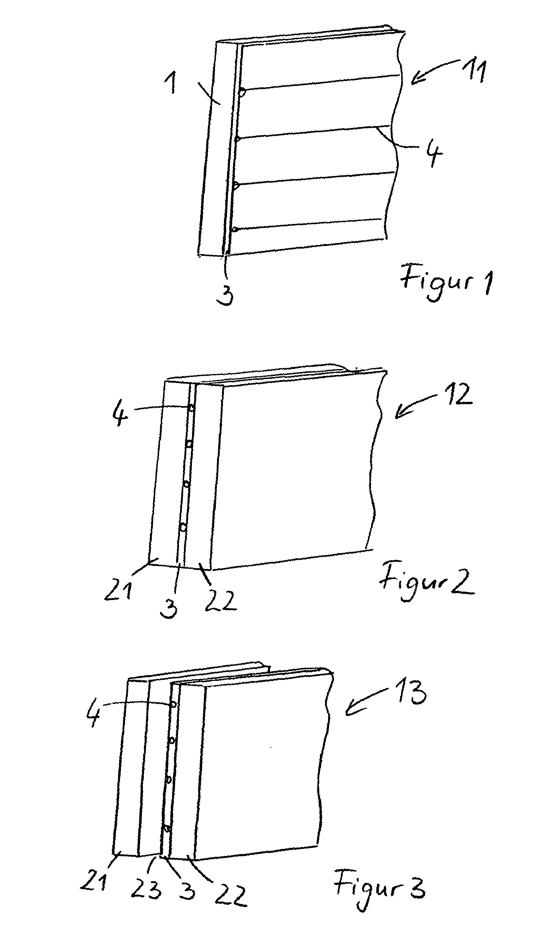

Fig.1 zeigt schematisch eine Ausführungsform einer erfindungsgemäßen Vorrichtung 11 zum Schutz vor Laserstrahlung. Die Vorrichtung 11 weist eine Schutzwand 1 aus Metall, Kunststoff oder eines Faserverbundwerkstoffs auf, auf welcher flächig eine Lage 3 vorgesehen ist. Die Lage 3 besteht aus Textil, Folie, Schaum und/oder Papier. In oder auf der Lage 3 sind in der Vorrichtung 11 mehrere metallische Leiter 4 textiltechnologisch ein- oder aufgebracht. Die metallischen Leiter 4 können genähte oder gestickte oder durch Nähen oder Sticken auf der Lage 3 befestigte elektrische Leiter sein. Beispielsweise können die metallischen Leiter 4 Drähte oder mit Metall beschichtete Textilfäden sein.

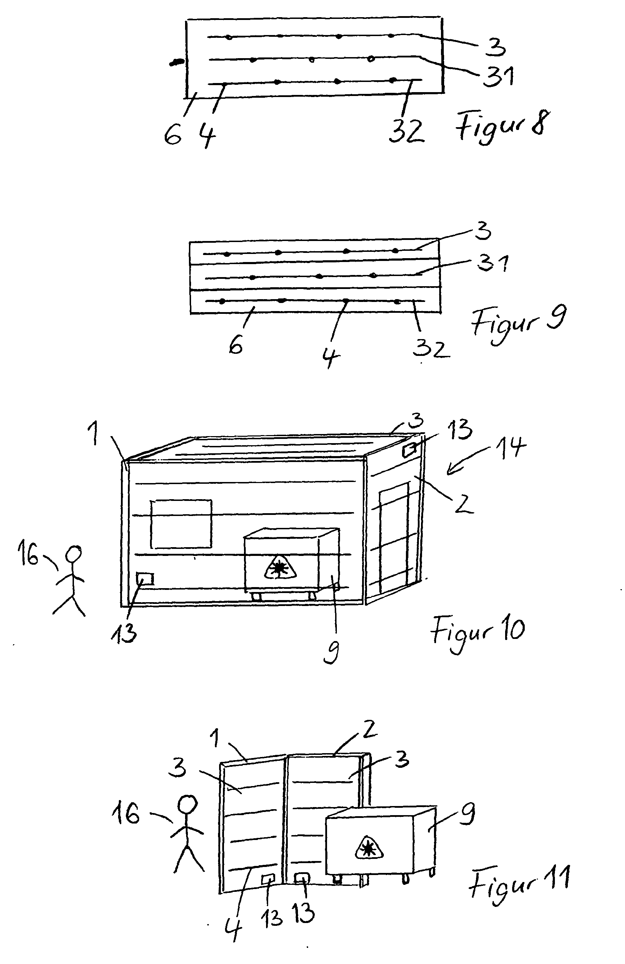

In der Vorrichtung von Fig. 11 sind mehrere metallische Leiter linienförmig in die Lage 3 genäht oder gestickt. In anderen Ausführungsvarianten der vorliegenden Erfindung reicht es jedoch prinzipiell aus, wenn nur ein metallischer Leiter 4 in oder auf der Lage 3 vorgesehen ist.

Kommt es durch die Einwirkung eines Laserstrahls, der länger als zulässig, bedingt durch einen Funktionsfehler, auf eine Stelle der Vorrichtung 11 gerichtet ist, zu einer temperaturbedingten Verformung der Lage 3, verformt sich auch wenigstens einer der metallischen Leiter 4. Die Längenänderung oder Dehnung des verformten metallischen Leiters 4 wird erfindungsgemäß registriert bzw. messtechnisch erfasst. Überschreitet die Längenänderung oder Dehnung einen zulässigen Grenzwert, wird ein Alarm ausgelöst und/oder der Laser abgeschaltet. Somit kann relativ schnell ein Schutz vor Laserstrahlung gewährleistet werden. Hierfür reicht es grundsätzlich aus, wenn sich die Lage 3 bzw. wenigstens ein darin vorgesehener metallischer Leiter 4 verformt. Eine Deformation der Schutzwand 1 selbst ist nicht unbedingt erforderlich. Auch muss es nicht zu einer Zerstörung eines der metallischen Leiter 4 kommen.

Fig. 2 zeigt schematisch ein weiteres Ausführungsbeispiel einer erfindungsgemäßen Vorrichtung 12 zum Schutz vor Laserstrahlung. Die Vorrichtung 12 weist zwei Schutzwandelemente 21, 22 auf, zwischen welchen eine Lage 3 mit darin oder darauf vorgesehenen metallischen Leitern 4 vorgesehen ist.

Die Schutzwandelemente 21, 22 können beispielsweise aus Metall, wie Aluminium, oder Kunststoff ausgebildet sein. Die Lage 3 kann aus Textil, Folie, Schaum und/oder Papier ausgebildet sein. Die metallischen Leiter 4 sind genähte oder gestickte oder durch Nähen oder Sticken auf der Lage 3 befestigte elektrische Leiter. Die metallischen Leiter 4 können Drähte oder mit Metall beschichtete Textilfäden sein. In der Vorrichtung von Fig. 12 sind die metallischen Leiter 4 linienförmig in die Lage 3 eingebracht. Auch wenn in der Vorrichtung 12 mehrere parallele metallische Leiter 4 in die Lage 3 eingebracht wurden, reicht es prinzipiell aus, wenn nur ein metallischer Leiter 4 in der Lage 3 vorgesehen ist.

Tritt beispielsweise ein Laserstrahl aus einer Laserstrahlbearbeitungseinrichtung 9, welche dem Schutzwandelement 22 der Vorrichtung 12 zugewandt ist, länger als zulässig auf das Schutzwandelement 22 auf, verformt sich das Schutzwandelement 22 durch die Temperaturbeanspruchung durch den einfallenden Laserstrahl. Die Deformation des Schutzwandelementes 22 wirkt sich direkt auf die Lage 3 aus, welche sich in der Vorrichtung 12 zwischen den Schutzwandelementen 21, 22 befindet. Die Deformation der Lage 3 führt wiederum zu einer Längenänderung bzw. Dehnung wenigstens eines der metallischen Leiter 4, welche erfindungsgemäß messtechnisch erfasst wird. Überschreitet die gemessene Längenänderung oder Dehnung des wenigstens einen metallischen Leiters 4 einen zulässigen Grenzwert, wird ein Alarm ausgelöst und/oder der Laser abgeschaltet, so dass ein Schutz vor Laserstrahlung gewährleistet werden kann.

Fig. 3 zeigt schematisch eine weitere Ausführungsform einer erfindungsgemäßen Vorrichtung 13 zum Schutz vor Laserstrahlung. Die Vorrichtung 13 weist zwei Schutzwandelemente 21, 22 aus Metall, Kunststoff oder einem Faserverbundwerkstoff auf, welche im Wesentlichen parallel zueinander ausgerichtet sind, wobei sich zwischen den Schutzwandelementen 21, 22 ein Luftspalt 23 befindet. Auf einer Außenseite des Schutzwandelementes 22, zwischen den Schutzwandelementen 21, 22, ist auf dem Schutzwandelement 22 flächig eine Lage 3 mit darin oder darauf vorgesehenen metallischen Leitern 4 angebracht. Die metallischen Leiter 4 sind genähte oder gestickte oder durch Nähen oder Sticken auf der Lage 3 befestigte elektrische Leiter. Die metallischen Leiter 4 können Drähte oder mit Metall beschichtete Textilfäden sein. In der Vorrichtung von Fig. 13 sind die metallischen Leiter 4 linienförmig, im Wesentlichen parallel zueinander in der Lage 3 vorgesehen, können aber in anderen Ausführungsformen der vorliegenden Erfindung auch dreidimensional oder in anderen Ausrichtungen und Formen in der Lage 3 ausgebildet sein.

Die Lage 3 besteht aus Textil, Folie, Schaum und/oder Papier. Auch wenn in der Vorrichtung 13 mehrere metallische Leiter 4 in der Lage 3 vorgesehen sind, reicht es prinzipiell aus, wenn wenigstens ein metallischer Leiter 4 in die oder auf der Lage 3 textiltechnologisch ein- bzw. aufgebracht ist.

Trifft beispielsweise ein Laserstrahl aus einer Laserstrahlbearbeitungseinrichtung 9, welcher das Schutzwandelement 22 zugewandt ist, auf das Schutzwandelement 22 länger als zulässig auf, kommt es durch die Temperaturbeeinflussung des Laserstrahls zu einer Deformation des Schutzwandelementes 22, welche sich direkt auf die Lage 3 auswirkt, so dass wenigstens ein in der Lage 3 vorgesehener metallischer Leiter 4 seine Länge ändert bzw. sich dehnt. Die Längenänderung oder Dehnung des metallischen Leiters 4 wird erfindungsgemäß erfasst und ausgewertet, so dass bei Überschreiten einer zulässigen Längenänderung oder Dehnung ein Signal ausgelöst werden kann und/oder der Laser abgeschaltet werden kann.

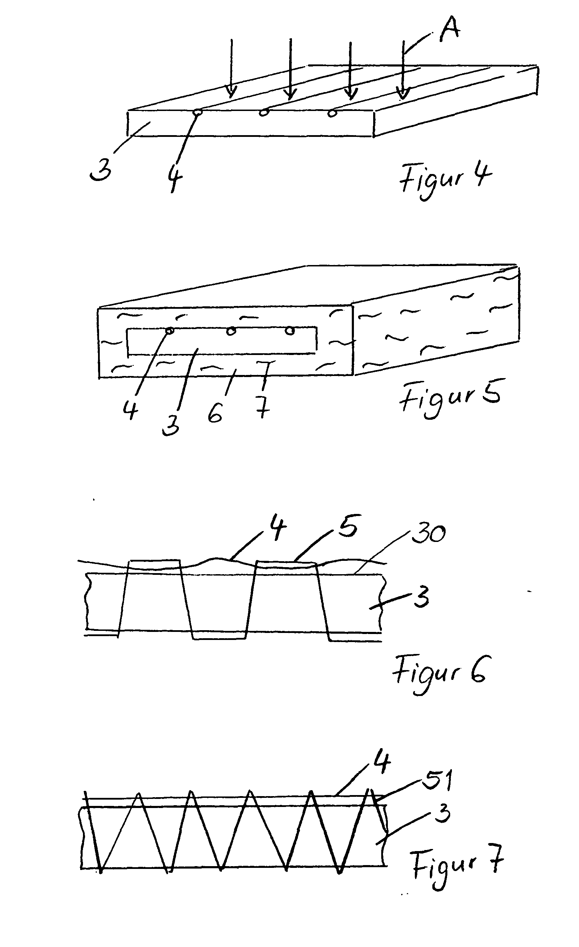

Fig. 4 zeigt schematisch eine Lage 3, in welche linienförmig mehrere metallische Leiter 4 textiltechnologisch ein- bzw. aufgebracht wurden. Wie durch die Pfeile A angedeutet, wird die Lage 3 mit einem härtbaren Kunststoff 6 oder Harz getränkt. Nach dem Härten des Kunststoffs 6 bzw. des Harzes entsteht hierdurch eine feste Struktur, in welcher die Leiterstrukturen 4 geeignet manifestiert sind und die Lage 3 in dem Kunststoff 6 oder das Harz integriert ist.

In anderen Ausführungsvarianten der vorliegenden Erfindung kann die Integration der Lage 3 in einem Kunststoff 6 oder einem Harz auch dadurch erfolgen, dass die Lage 3, in oder auf welche wenigstens ein metallischer Leiter 4 ein- bzw. aufgebracht wurde, in eine Form gebracht wird, welche mit dem Kunststoff 6 oder Harz gefüllt wird, so dass die Lage 3 mit dem darin oder darauf vorgesehenen metallischen Leiter 4 teilweise oder komplett eingegossen werden kann. Nach dem Härten des Kunststoffes 6 bzw. des Harzes entsteht eine Struktur, welche beispielsweise schematisch in Fig. 5 dargestellt ist. Hier ist die Lage 3 mit den darin befindlichen metallischen Leitern 4 vollständig in ein Kunststoffmaterial 6 eingegossen. Dem Kunststoff 6 bzw. in anderen Ausführungsvarianten dem Harz, wurde in der Ausführungsvariante von Fig. 5 Kohlenstoff 7 beigemengt. Hierdurch kann die Standzeit des Kunststoffmaterials 6 gegenüber auftreffender Laserstrahlung erhöht werden.

Fig. 6 zeigt schematisch eine Lage 3, auf welche ein metallischer Leiter 4 durch Nähen oder Sticken aufgebracht wurde. Beim Nähen oder Sticken werden grundsätzlich zwei Fäden 5 verwendet, wobei die Näh- bzw. Sticktechnologie so ausgeführt werden kann, dass einer der Fäden, hier der metallische Leiter 4, nahezu geradlinig auf einer Oberfläche der Lage 3 verläuft, während der andere Faden 5, der nichtmetallisch ist, sich durch die Lage 3 zumindest teilweise erstreckt, um den metallischen Leiter 4 auf der Lage 3 zu manifestieren.

Fig. 7 zeigt eine Lage 3, auf welche ein metallischer Leiter 4 mit Hilfe des fiber-taylor-placement-Verfahrens aufgebracht wurde. Hierfür wird der metallische Leiter 4 auf die Lage 3 aufgelegt und durch einen nichtmetallischen Faden 51 an der Lage 3 befestigt, wobei sich der Faden 51 im Wesentlichen zickzackartig durch die Lage 3 erstreckt und den metallischen Leiter 4 auf der Lage 3 derart manifestiert, dass der metallischer Leiter 4 nahezu eben auf der Oberfläche 30 der Lage 3 verläuft bzw. sich nahezu nicht verwölbt.

Fig. 8 zeigt schematisch eine Anordnung aus mehreren Lagen 3, 31, 32, welche sandwichartig in einem Kunststoff 6 oder Harz integriert sind. Die Lagen 3, 31, 32 weisen jeweils eine Mehrzahl paralleler, linienförmiger metallischer Leiter 4 auf, die so zueinander versetzt in bzw. auf den Lagen 3, 31, 32 vorgesehen sind, dass sie in ihrer Anordnung in dem Kunststoff 6 oder dem Harz ein Sensorgitter ausbilden. Somit stehen mehrere redundante Lage 3, 31, 32 mit jeweils darin bzw. darauf vorgesehenen metallischen Leitern 4 zur Verfügung, die sowohl gemeinsam als auch separat einen Schutz vor Laserstrahlung gewährleisten.

Fig. 9 zeigt schematisch eine Anordnung, bei welcher mehrere parallele Lagen 3, 31, 32 in einer Stapelanordnung vorgesehen sind. Jede der Lagen 3 kann dabei separat in einen Kunststoff 6 oder Harz eingegossen sein. Die Lagen 3, 31, 32 weisen darin bzw. darauf in bzw. aufbrachte metallische Leiter 4 auf, die derart in den Lagen 3, 31, 32 angeordnet sind, dass sie in der Stapelanordnung aus Fig. 9 ein Sensorgitter ausbilden.

Fig. 10 zeigt schematisch eine erfindungsgemäße Vorrichtung 14 zum Schutz vor Laserstrahlung, wobei wenigstens zwei Schutzwände 1, 2, auf oder in welchen jeweils wenigstens eine Lage 3 mit wenigstens einem textiltechnologisch ein- oder aufgebrachten Leiter 4 vorgesehen ist, vorgesehen sind. Die Schutzwände 1, 2 können aus Metall, wie beispielsweise Aluminium, oder einem anderen Werkstoff, wie beispielsweise Kunststoff, bestehen. Die Lagen 3 sind aus Textil, Folie, Schaum und/oder Papier ausgebildet. Die Lagen 3 sind auf den Schutzwänden 1, 2 flächig aufgeklebt, auflaminiert, geschraubt, genagelt oder geklettet. Die in die Lagen 3 ein- bzw. aufgebrachten metallischen Leiter 4 sind genähte oder gestickte oder durch Nähen oder Sticken auf den Lagen 3 befestigte elektrische Leiter, wobei die metallischen Leiter 4 Drähte oder mit Metall beschichtete Textilfäden sein können.

In der Vorrichtung 14 sind jeweils pro Schutzwand 1, 2 mehrere parallele linienförmige metallische Leiter 4 in den Lagen 3 vorgesehen. Grundsätzlich reicht es jedoch aus, wenn pro Schutzwand 1, 2 wenigstens ein metallischer Leiter 4 vorgesehen ist, wobei je nach Größe der Schutzwand 1, 2 entsprechend so viele metallische Leiter 4 in der jeweiligen Lage 3 vorgesehen sein sollten, dass sich eine mechanische Deformation der jeweiligen Schutzwand 1, 2 in einer Deformation des wenigstens einen metallischen Leiters 4 niederschlägt.

Die Vorrichtung 14 bildet eine Einhausung 14 für eine Laserbearbeitungseinrichtung 9 aus, die sich im Inneren der Einhausung 14 befindet.

In der Vorrichtung 14 sind die Lagen 3 jeweils an den Innenflächen der Schutzwände 1, 2 angebracht. Es ist jedoch auch möglich, dass sich, wie in den Fig. 2 und 3 schematisch gezeigt, die jeweiligen Lagen 3 zwischen Schutzwandelementen 21, 22 befinden, aus welchen die Schutzwände 1, 2 ausgebildet sind. Ferner ist es möglich, dass sich die Lagen 3 an den Außenseiten der Schutzwände 1, 2 befinden.

Die Einhausung 14 ist rundum, das heißt auch an ihrer Decke, an Türen, Sichtfenstern usw. mit wenigstens einer Lage 3 versehen, wobei in oder auf die Lage 3 wenigstens ein metallischer Leiter 4 textiltechnologisch ein- bzw. aufgebracht ist. Auf diese Weise wird eine Person 16, die sich außerhalb der Einhausung 14 befindet, effektiv vor Laserstrahlung der Laserbearbeitungseinrichtung 9, welche unzulässig auf die Einhausung 14 auftrifft, geschützt.

Fig. 11 zeigt schematisch eine weitere mögliche Ausführungsvariante einer erfindungsgemäßen Vorrichtung 15 zum Schutz vor Laserstrahlung. Die Vorrichtung 15 ist als eine separate Stellwand ausgebildet, welche geeignet zwischen einer Person 16 und einer Laserbearbeitungseinrichtung 9 positioniert werden kann. Die Vorrichtung 15 weist in dem gezeigten Beispiel zwei durch einen Klappmechanismus miteinander verbundene Schutzwände 1, 2 auf, auf oder in welchen jeweils eine Lage 3 mit wenigstens einem textiltechnologisch ein- oder aufgebrachten Leiter 4 vorgesehen ist. In der Vorrichtung 15 sind die Lagen 3 der Laserbearbeitungseinrichtung 9 zugewandt, können jedoch in anderen Ausführungsformen der vorliegenden Erfindung so an den Schutzwänden 1, 2 vorgesehen sein, dass sie von der Laserbearbeitungseinrichtung 9 abgewandt sind.

Sowohl in der Vorrichtung 14 aus Fig. 10 als auch in der Vorrichtung 15 aus Fig. 11 kann in wenigstens einer der Schutzwände 1, 2 ein Temperatursensor 13 vorgesehen sein. Mit Hilfe des Temperatursensors 13 kann eine Temperaturveränderung der Vorrichtung 14, 15 erfasst werden, was ein zusätzlicher Hinweis, neben einer gemessenen Deformation wenigstens eines metallischen Leiters 4, auf ein unzulässige Auftreffen eines Laserstrahls aus der Laserbearbeitungseinrichtung 9 auf die jeweilige Schutzwand 1, 2 sein kann.

Somit kann die erfindungsgemäße Vorrichtung 14, 15 sowohl als Maschineneinhausung als auch als separater Schutz vor Laserstrahlung eingesetzt werden, wobei jeweils große Flächen einen sicheren Schutz vor Laserstrahlung zur Verfügung stellen können. Die großen Flächen können auf einfache und kostengünstige Weise hergestellt werden. Darüberhinaus können die Schutzwände 1, 2 mit den daran vorgesehenen Lagen 3 sowohl leicht als auch dünn zur Verfügung gestellt werden. Als lasttragende Strukturen können neben den im Stand der Technik bekannten Metallwänden für die Schutzwände 1, 2 auch Faserverbundmaterialien eingesetzt werden, welche leicht und geräuschdämmend sind und zudem leicht montierbar sind. Auf diese Weise kann in bestimmten Anwendungsfällen vollständig auf die Verwendung von Metallen bzw. Stahl verzichtet werden, wodurch besonders leichte und preisgünstige Einhausungen zur Verfügung gestellt werden können.

An Vorrichtungen zum Schutz vor Laserstrahlung werden aufgrund des Einsatzes sehr leistungsstarker Laser stetig erhöhte Anforderungen gestellt, die mit einem bloßen Passiv-Schutz, wie er bisher im Stand der Technik beispielsweise durch den Einsatz bestimmter Materialien oder Materialdicken bewerkstelligt wurde, nicht mehr erfüllt werden können. Entsprechend eignet sich die vorliegende Erfindung insbesondere, um in Ergänzung zu bzw. in Kombination mit einem Passiv-Schutz zum Schutz vor Laserstrahlung eingesetzt werden zu können.

Die Erfindung nutzt die Dehnung bzw. Längenänderung des wenigstens einen in oder auf die Lage 3 ein- bzw. aufgebrachten metallischen Leiters 4 als Mess- bzw. Wirkprinzip der Erfindung, wobei die Verformung des metallischen Leiters 4, egal welcher Art, detektiert wird. Ein Schmelzen oder gar eine Zerstörung des meta!!ischen Leiters 4 ist hierfür nicht erforderlich, kann jedoch erfindungsgemäß nicht ausgeschlossen werden. Es können jedoch Strukturen, wie in den Fig. 8 oder 9 schematisch dargestellt, verwendet werden, bei welchen redundante Lagen 31, 32, zusätzlich zu einer Lage 3, mit metallischen Leitern 4 vorgesehen sind, die gegebenenfalls als zusätzlicher Schutzmechanismus eingesetzt werden können.

Die Erfindung bietet ferner den Vorteil, dass sie hinsichtlich ihres Aufbaus relativ variabel ist, wobei die Lage 3 mit dem wenigstens einen metallischen Leiter 4 einem Arbeitsraum einer Laserbearbeitungseinrichtung 9 sowohl zu als auch abgewandt sein kann. Es kann sowohl eine einstückige Schutzwand 1 als auch eine aus Schutzwandelementen 21, 22 aufgebaute Schutzwand sowie eine Vielzahl miteinander kombinierter Schutzwände 1, 2 oder Schutzwandelemente 21, 22 verwendet werden.

Hinsichtlich der Aufbringung der Lage 3 auf der Schutzwand 1, 2 bestehen keine besonderen Anforderungen, so dass gängige Verfahren, wie Kleben, Laminieren, Schrauben, Nageln oder Kletten eingesetzt werden können.

Die Schutzwände 1, 2 oder eine gesamte Einhausung, wie die Vorrichtung 14 aus Fig. 10, können vollständig aus Faserverbunden ausgebildet werden, auf welche die Lagen 3 geeignet aufgebracht sind. Die Lagen 3 können jedoch auch gleich als textile Lagen mit textiltechnologisch ein- bzw. aufgebrachten metallischen Leitern 4 ausgebildet und in einen Kunststoff 6 eingegossen werden und daraufhin als Schutzwände 1, 2 einer Einhausung, wie der Vorrichtung 14 aus Fig. 10, dienen.

Ferner ist man im Wesentlichen frei hinsichtlich der textiltechnologischen Einbringung oder Aufbringung des metallischen Leiters 4 in oder auf die Lage 3. Besonders geeignet sind jedoch Näh- bzw. Stickverfahren oder Verfahren, in welchen der Faden glatt auf eine Lage 3 aufgelegt und mittels einer Nadel oder Näh- bzw. Sticktechnologie befestigt wird. Im fiber-taylor-placement-Verfahren kann beispielsweise ein metallischer Leiter 4 mit Null-Fadenspannung auf einer Lage 3 befestigt werden.

Für ein Eingießen oder Durchtränken einer Lage 3 eignet sich beispielweise ein ZweiKomponenten-Kleber bzw. Epoxidharz, welcher bzw. welches nach Aushärten eine steife Struktur zur Verfügung stellt. Hierdurch lassen sich Fehlmessungen weitgehend verhindern.

Die Lage 3 kann auf der Schutzwand 1, 2 beispielsweise wie eine Tapete aufgeklebt werden. Somit lassen sich auf einfache Weise große Flächen von Schutzwänden 1, 2 mit der Lage 3 versehen.

Für die messtechnische Auswertung einer Deformation des metallischen Leiters 4 eignet es sich insbesondere, wenn der metallische Leiter 4 geradlinig in die Lage 3 eingebracht wird. Über die Fadenspannung kann beim textiltechnologischen Einbringen des metallischen Leiters 4, wie beim Nähen oder Sticken, die Eindringtiefe des Fadens bzw. metallischen Leiters 4 beeinflusst werden.

Eine elektrische Isolierung des wenigstens einen metallischen Leiters 4 ist erfindungsgemäß nicht unbedingt erforderlich, kann jedoch vorgesehen werden.

Das messtechnische Prinzip der vorliegenden Erfindung ist sehr effektiv, so dass es im Extremfall auch ausreicht, nur einen metallischen Leiter 4 in der Lage 3 zu verwenden, da durch das Material der Lage 3 eine Übertragung einer mechanischen Deformation der Lage 3 über weite Strecken auf den metallischen Leiter 4 übertragen und damit gemessen werden kann.

Zudem ist es erfindungsgemäß möglich, den metallischen Leiter 4 auch dreidimensional in der Lage 3 vorzusehen. Auf diese Weise können neben der eigentlichen Dehnungsmessung auch Druck- oder Schubmessungen über den metallischen Leiter 4 vorgenommen werden. Auf diese Weise lässt sich eine Belastungsmessung realisieren, so dass die mechanische Belastung der jeweiligen Schutzwand 1, 2 erfasst werden kann.

Der oder die metallischen Leiter 4 lassen sich ohne Weiteres elektrisch kontaktieren. Dafür bieten sich Verfahren, wie Löten, Kleben, eine Verbindung durch Kraftschluss, welche beispielsweise in einem Rahmen einer Schutzwand 1, 2 erfolgen kann, Klemmen, Übersticken oder eine elektrische Kontaktierung mittels Ultraschall an.

Die vorliegende Erfindung kann auch dann zum Einsatz kommen, wenn anstelle der Erfassung einer Längenänderung oder Dehnung des wenigstens einem metallischen Leiters 4 eine kapazitive oder induktive Auswertung der Veränderung an dem jeweiligen metallischen Leiter 4 vorgenommen wird. Hierbei kann der grundlegende konstruktive Aufbau der erfindungsgemäßen Vorrichtung beibehalten werden.

Ferner kann neben der Dehnungs- oder Längenänderung des wenigstens einen metallischen Leiters 4 auch eine Leitfähigkeitsänderung an dem metallischen Leiter 4 durch Temperaturänderung erfasst werden oder parallel zu dem wenigstens einen metallischen Leiter 4 ein oder mehrere Temperatursensoren 13 vorgesehen werden. Somit kann unterschieden werden, ob eine rein mechanische Einwirkung auf die jeweilige Schutzwand 1, 2 erfolgt ist oder die mechanische Deformation der Schutzwand 1, 2 auf eine Lasereinwirkung infolge Temperaturänderung und Verformung zurückzuführen ist.

Die erfindungsgemäße Vorrichtung besitzt weiterhin den Vorteil, dass sie sehr energieeffizient arbeitet. Ist der Laser, vor welchem ein Schutz gewährleistet werden soll, ausgeschaltet, kann auch die erfindungsgemäße Vorrichtung ausgeschaltet bleiben. Bei jedem Neueinschalten des Lasers kann die erfindungsgemäße Vorrichtung automatisch auch mit eingeschaltet werden. Dabei ist es sinnvoll, wenn die Sensoren der Vorrichtung bei einem Neueinschalten neu kalibriert werden. Ferner ist es möglich, bei jedem Neueinschalten einen Funktionstest der Vorrichtung durchzuführen, welcher beispielsweise über eine Leitfähigkeitsmessung an den metallischen Leitern 4 erfolgen kann.

Darüber hinaus können Laminate, wie in Fig. 5 schematisch dargestellt, verwendet werden, in welche Kohlenstoff beigemengt wurde, um die Standzeit des Laminats zu erhöhen bzw. den Passivschutz der Vorrichtung heraufzusetzen. Somit besteht ein zusätzlicher Schutz für Personen, die durch die erfindungsgemäße Vorrichtung vor Laserstrahlen geschützt werden sollen.

## Patentansprüche

1. Vorrichtung zum Schutz vor Laserstrahlung mit wenigstens einer Schutzwand (1, 2),
**dadurch gekennzeichnet,**
**dass** flächig auf oder in der Schutzwand (1, 2) wenigstens eine Lage (3) vorgesehen ist, wobei auf der Lage (3) wenigstens ein genähter oder gestickter oder durch Nähen oder Sticken auf der Lage (3) befestigter metallischer elektrischer Leiter (4), der bei einem Auftreffen von Laserstrahlung auf die Schutzwand (1, 2) eine Längenänderung oder Dehnung erfährt, textiltechnologisch aufgebracht ist.

2. Vorrichtung nach Anspruch 1, **dadurch gekennzeichnet, dass** der metallische Leiter (4) ein Draht oder ein mit einem Metall beschichteter Textilfaden ist.

3. Vorrichtung nach einem der vorhergehenden Ansprüche, **dadurch gekennzeichnet, dass** der metallische Leiter (4) linienförmig oder dreidimensional auf oder in der Lage (3) vorgesehen ist.

4. Vorrichtung nach einem der vorhergehenden Ansprüche, **dadurch gekennzeichnet, dass** die Lage (3) aus Textil, Folie, Schaum und/oder Papier ausgebildet ist.

5. Vorrichtung nach einem der vorhergehenden Ansprüche, **dadurch gekennzeichnet, dass** die Lage (3) in einen Kunststoff (6) oder ein Harz integriert ist.

6. Vorrichtung nach Anspruch 5, **dadurch gekennzeichnet, dass** dem Kunststoff (6) oder Harz Kohlenstoff (7) beigemengt ist.

7. Vorrichtung nach einem der vorhergehenden Ansprüche, **dadurch gekennzeichnet, dass** mehrere Lagen (3, 31, 32) sandwichartig in einem Kunststoff (6) oder Harz integriert sind, wobei die metallischen Leiter (4) der Lagen (3, 31, 32) ein Sensorgitter ausbilden.

8. Vorrichtung nach einem der vorhergehenden Ansprüche, **dadurch gekennzeichnet, dass** die Schutzwand (1, 2) wenigstens zwei Schutzwandelemente (21, 22) aufweist, zwischen welchen die Lage (3) vorgesehen ist.

9. Vorrichtung nach einem der vorhergehenden Ansprüche, **dadurch gekennzeichnet, dass** ein oder mehrere Schutzwände (1, 2), auf oder in welchen jeweils wenigstens eine Lage (3) mit wenigstens einem textiltechnologisch aufgebrachten metallischen Leiter (4) vorgesehen ist, eine Einhausung (14) für eine Laserbearbeitungseinrichtung (9) ausbilden.

10. Vorrichtung nach Anspruch 9, **dadurch gekennzeichnet, dass** die Lage (3) auf der Innenfläche der Einhausung (14), der Laserbearbeitungseinrichtung (9) zugewandt, vorgesehen ist.

11. Vorrichtung nach Anspruch 9, **dadurch gekennzeichnet, dass** die Lage (3) auf einer Außen- oder Zwischenfläche der Einhausung (14), der Laserbearbeitungseinrichtung (9) abgewandt, vorgesehen ist.

12. Vorrichtung nach einem der vorhergehenden Ansprüche, **dadurch gekennzeichnet, dass** die Vorrichtung (11) als eine separate Stellwand (15) ausgebildet ist.

13. Vorrichtung nach einem der vorhergehenden Ansprüche, **dadurch gekennzeichnet, dass** die Vorrichtung wenigstens einen Temperatursensor (13) aufweist.

14. Verfahren zum Ausbilden einer Vorrichtung zum Schutz vor Laserstrahlung unter Verwendung wenigstens einer Schutzwand (1, 2),
**dadurch gekennzeichnet,**
**dass** wenigstens ein metallischer elektrischer Leiter (4) derart textiltechnologisch durch Nähen oder Sticken auf eine Lage (3) aufgebracht wird oder durch Nähen oder Sticken auf der Lage (3) befestigt wird und die Lage (3) flächig auf oder in die Schutzwand (1, 2) angebracht wird, dass der metallische elektrische Leiter (4) bei einem Auftreffen von Laserstrahlung auf die Schutzwand (1, 2) eine Längenänderung oder Dehnung erfährt.

15. Verfahren nach Anspruch 14, **dadurch gekennzeichnet, dass** die Lage (3) mit dem ein- oder aufgebrachten metallischen Leiter (4) in einen härtenden Kunststoff (6) oder ein härtendes Harz eingegossen oder mit dem härtenden Kunststoff (6) oder Harz getränkt wird.

16. Verfahren nach Anspruch 15, **dadurch gekennzeichnet, dass** dem Kunststoff (6) oder dem Harz Kohlenstoff (7) beigemengt wird.

17. Verfahren nach einem der Ansprüche 14 bis 16, **dadurch gekennzeichnet, dass** der metallische Leiter (4) durch Löten, Kleben, durch Kraftschluss, mit textiltechnologischen Verfahren oder durch Ultraschall elektrisch kontaktiert wird.

18. Verfahren nach einem der Ansprüche 14 bis 17, **dadurch gekennzeichnet, dass** die Lage (3) auf oder in die Schutzwand (1, 2) aufgeklebt, auflaminiert, geschraubt, genagelt oder geklettet wird.

19. Verfahren zum Schutz vor Laserstrahlung unter Verwendung wenigstens einer Schutzwand (1, 2),
**dadurch gekennzeichnet,**
**dass** eine Längenänderung oder eine Dehnung wenigstens eines textiltechnologisch durch Nähen oder Sticken auf eine Lage (3) aufgebrachten oder durch Nähen oder Sticken auf der Lage (3) befestigten metallischen elektrischen Leiters (4), der mit der Lage (3) flächig auf oder in der Schutzwand (1, 2) angebracht ist, bei einem Auftreffen von Laserstrahlung auf die Schutzwand (1, 2) erfasst wird.

## Claims

1. A device for protecting against laser radiation comprising at least one protective wall (1, 2), **characterized in that**
at least one layer (3) is provided flatly on or in said protective wall (1, 2), wherein at least one metallic electrical conductor (4) that is either sewed or embroidered onto, or attached by sewing or embroidering to, said layer (3), is applied using textile technology and is subjected to a change in length or stretching when laser radiation hits said protective wall (1, 2).

2. The device according to claim 1, **characterized in that** said metallic conductor (4) is a wire or a textile thread coated with a metal.

3. The device according to any one of the preceding claims, **characterized in that** the metallic conductor (4) is provided in a linear shape or three dimensions on or in the layer (3).

4. The device according to any one of the preceding claims, **characterized in that** the layer (3) is made from textile, film, foam, and/or paper.

5. The device according to any one of the preceding claims, **characterized in that** the layer (3) is integrated in a plastic (6) or a resin.

6. The device according to claim 5, **characterized in that** the plastic (6) or resin is admixed with carbon (7).

7. The device according to any one of the preceding claims, **characterized in that** several layers (3, 31, 32) are integrated sandwich-like into a plastic (6) or resin, wherein the metallic conductors (4) of the layers (3, 31, 32) form a sensor grid.

8. The device according to any one of the preceding claims, **characterized in that** the protective wall (1, 2) comprises at least two protective wall elements (21, 22) between which the layer (3) is provided.

9. The device according to any one of the preceding claims, **characterized in that** one or several protective walls (1, 2) on or in each of which at least one layer (3) with at least one metallic conductor (4) applied to it using textile technology is provided, form an enclosure (14) for a laser beam processing facility (9).

10. The device according to claim 9, **characterized in that** the layer (3) is provided on the inner surface of the housing (14) facing the laser beam processing facility (9).

11. The device according to claim 9, **characterized in that** the layer (3) is provided on an outer or intermediate surface of the housing (14), facing away from the laser beam processing facility (9).

12. The device according to any one of the preceding claims, **characterized in that** the device (11) is designed as a separate partition (15).

13. The device according to any one of the preceding claims, **characterized in that** the device comprises at least one temperature sensor (13).

14. A method for constructing a device for protection against laser radiation using at least one protective wall (1, 2),
**characterized in that**
at least one metallic electrical conductor (4) is applied onto a layer (3) using textile technology such as sewing or embroidering or is attached to a layer (3) by sewing or embroidering and said layer (3) is applied flatly onto or inserted flatly into a protective wall (1, 2) such that said metallic electrical conductor (4) is subjected to a change in length or to stretching when laser radiation hits the protective wall (1, 2).

15. The method according to claim 14, **characterized in that** the layer (3) and the metallic conductor (4) inserted in or applied to it are embedded in a curing plastic (6) or a curing resin or impregnated with the curing plastic (6) or resin.

16. The method according to claim 15, **characterized in that** the plastic (6) or resin is admixed with carbon (7).

17. The method according to any one of claims 14 to 16, **characterized in that** the metallic conductor (4) is contacted by soldering, gluing, friction locking, textile technological methods, or by ultrasound.

18. The method according to any one of claims 14 to 17, **characterized in that** the layer (3) is glued, laminated, screwed, nailed, or velcroed to the protective wall (1, 2).

19. A method for protection against laser radiation using at least one protective wall (1, 2),
**characterized in that**
it captures a change in length or a stretching of at least one metallic electric conductor (4) applied to a layer (3) using textile technology by sewing or embroidering or attached to said layer (3) by sewing or embroidering and being flatly mounted with said layer (3) to or into the protective wall (1, 2) when laser radiation hits the protective wall (1, 2).

## Revendications

1. Dispositif destiné à la protection contre les rayons laser avec au moins un écran protecteur (1, 2),
**caractérisé en ce**
**qu'**il est prévue au moins une nappe (3) qui, elle, est disposée sur la surface entière de l'écran protecteur (1, 2) ou à l'intérieur de celui-ci, où au moins un conducteur métallique électrique (4) cousu ou brodé est appliqué moyennant un procédé textile technologique à la nappe (3) ou bien fixé sur cette dernière par couture ou broderie, le conducteur subissant un changement de longueur ou une expansion lors de l'impact des rayons laser sur l'écran protecteur (1, 2).

2. Dispositif selon la revendication 1, **caractérisé en ce que** le conducteur métallique (4) est un fil ou un fil textile revêtu d'un métal.

3. Dispositif selon l'une quelconque des revendications précédentes, **caractérisé en ce que** le conducteur métallique (4) est disposé sur la nappe (3) ou à l'intérieur de celle-ci, soit en forme de ligne, soit de façon tridimensionnelle.

4. Dispositif selon l'une quelconque des revendications précédentes, **caractérisé en ce que** la nappe (3) est en textile, feuille, mousse et/ou en papier.

5. Dispositif selon l'une quelconque des revendications précédentes, **caractérisé en ce que** la nappe (3) est intégrée soit dans une matière plastique (6), soit dans une résine.

6. Dispositif selon la revendication 5, **caractérisé en ce que** du carbone (7) est additionné à la matière plastique (6) ou à la résine.

7. Dispositif selon l'une quelconque des revendications précédentes, **caractérisé en ce que** plusieurs nappes (3, 31, 32) sont intégrées en sandwich soit dans une matière plastique (6), soit dans une résine, et que les conducteurs métalliques (4) des nappes (3, 31, 32) représentent un treillis palpeur.

8. Dispositif selon l'une quelconque des revendications précédentes,
**caractérisé en ce que** l'écran protecteur (1, 2) est muni d'au moins deux éléments d'écran protecteur (21, 22), entre lesquels est disposée la nappe (3).

9. Dispositif selon l'une quelconque des revendications précédentes,
**caractérisé en ce qu'**un ou plusieurs écrans protecteurs (1, 2) y sont prévus, et que sur ou à l'intérieur de ces écrans protecteurs est disposée au moins une nappe (3) avec au moins un conducteur métallique (4) qui, lui, y est appliqué moyennant un procédé textile technologique, le tout représentant un encoffrage (14) pour un dispositif d'usinage par laser (9).

10. Dispositif selon la revendication 9, **caractérisé en ce que** la nappe (3) est disposée sur la face intérieure de l'encoffrage (14), de telle sorte qu'elle montre vers le dispositif d'usinage par laser (9).

11. Dispositif selon la revendication 9, **caractérisé en ce que** la nappe (3) est disposée sur la face extérieure ou intermédiaire de l'encoffrage (14), de telle sorte qu'elle montre vers le côté opposé du dispositif d'usinage par laser (9).

12. Dispositif selon l'une quelconque des revendications précédentes, **caractérisé en ce que** le dispositif (11) représente un écran amovible séparé (15).

13. Dispositif selon l'une quelconque des revendications précédentes, **caractérisé en ce que** le dispositif est muni d'au moins un capteur de température (13).

14. Procédé de représentation d'un dispositif destiné à la protection contre les rayons laser en utilisant au moins un écran protecteur (1, 2),
**caractérisé en ce**
**qu'**au moins un conducteur métallique électrique (4) est appliqué à une nappe (3) ou fixé sur celle-ci moyennant un procédé textile technologique - par couture ou broderie -, et que la nappe (3) est disposée sur la surface entière de l'écran protecteur (1, 2) ou à l'intérieur de ce dernier, de telle sorte que le conducteur métallique électrique (4) subisse un changement de longueur ou une expansion lors de l'impact des rayons laser sur l'écran protecteur (1, 2).

15. Procédé selon la revendication 14, **caractérisé en ce que** la nappe (3) soit scellée avec le conducteur métallique (4) qui, lui, a été intégré dans ou fixé sur la nappe, dans une matière plastique durcissante (6) ou dans une résine, soit imprégnée de la matière plastique durcissante (6) ou de la résine.

16. Procédé selon la revendication 15, **caractérisé en ce que** du carbone (7) est additionné à la matière plastique durcissante (6) ou à la résine.

17. Procédé selon l'une quelconque des revendications 14 à 16, **caractérisé en ce que** le conducteur métallique (4) est électriquement contacté soit par brasage, collage ou adhérence, soit par un procédé textile technologique ou par ultrason.

18. Procédé selon l'une quelconque des revendications 14 à 17, **caractérisé en ce que** la nappe (3) est collée, laminée, vissée, clouée ou fixée par bande auto-agrippante sur l'écran protecteur (1, 2) ou à l'intérieur de delui-ci.

19. Procédé de protection contre les rayons laser en utilisant au moins un écran protecteur (1, 2),
**caractérisé en ce**
**qu'**un changement de longueur ou une expansion d'au moins un conducteur métallique électrique (4) qui, lui, a été appliqué à la nappe (3) ou fixé sur la celle-ci moyennant un procédé textile technologique - par couture ou broderie -, et qui est en plus fixé avec la nappe (3) sur toute la surface de l'écran protecteur (1, 2) ou à l'intérieur de ce dernier, intervient lors de l'impact des rayons laser sur l'écran protecteur (1, 2).
